(19) Europäisches Patentamt
European Patent Office
Office européen des brevets

(11) **EP 4 113 657 A1**

(12) **EUROPEAN PATENT APPLICATION**

(43) Date of publication:
**04.01.2023 Bulletin 2023/01**

(21) Application number: **21183474.2**

(22) Date of filing: **02.07.2021**

(51) International Patent Classification (IPC):
$H01M\ 4/134^{(2010.01)}$  $H01M\ 4/36^{(2006.01)}$
$H01M\ 4/38^{(2006.01)}$  $H01M\ 4/48^{(2010.01)}$
$H01M\ 4/587^{(2010.01)}$  $H01M\ 4/62^{(2006.01)}$
$H01M\ 10/0525^{(2010.01)}$  $H01M\ 4/02^{(2006.01)}$

(52) Cooperative Patent Classification (CPC):
**H01M 4/38; H01M 4/134; H01M 4/36; H01M 4/386;**
**H01M 4/48; H01M 4/587; H01M 4/62;**
**H01M 10/0525;** H01M 2004/021; H01M 2004/027

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Umicore**
**1000 Brussels (BE)**

(72) Inventors:
• **KUN, Feng**
**2250 Olen (BE)**
• **BRIDEL, Jean-Sébastien**
**2250 Olen (BE)**
• **MOEREMANS, Boaz**
**2250 Olen (BE)**

(54) **A POWDER FOR USE IN THE NEGATIVE ELECTRODE OF A BATTERY AND A BATTERY COMPRISING SUCH A POWDER**

(57) A powder for use in a negative electrode of a battery, the powder comprising particles, the particles comprising a matrix material and silicon-based particles dispersed in said matrix material, the powder having a total specific volume of open porosity at least equal to 0.005 $cm^3/g$ and at most equal to 0.04 $cm^3/g$, a total specific volume of closed porosity at least equal to 0.01 $cm^3/g$ and at most equal to 0.1 $cm^3/g$, and a ratio of the total specific volume of open porosity over the total specific volume of closed porosity at least equal to 0.05 and at most equal to 0.95.

**Figure 1**

EP 4 113 657 A1

**Description**

**TECHNICAL FIELD AND BACKGROUND**

The present invention relates to a powder suitable for use in the negative electrode of a battery and a battery comprising such a powder.

Lithium ion (Li-ion) batteries are currently the best performing batteries and already became the standard for portable electronic devices. In addition, these batteries already penetrated and rapidly gain ground in other industries such as automotive and electrical storage. Enabling advantages of such batteries are a high energy density combined with a good power performance.

A Li-ion battery typically contains a number of so-called Li-ion cells, which in turn contain a positive electrode, also called cathode, a negative electrode, also called anode, and a separator which are immersed in an electrolyte. The most frequently used Li-ion cells for portable applications are developed using electrochemically active materials such as lithium cobalt oxide or lithium nickel manganese cobalt oxide for the cathode and a natural or artificial graphite for the anode.

It is known that one of the important limitative factors influencing a battery's performance and in particular battery's energy density is the active material in the anode. Therefore, to improve the energy density, the use of electrochemically active materials comprising silicon in the negative electrode have been investigated over the past years.

Note that throughout this document silicon is intended to mean the element Si in its zerovalent state. The term Si will be used to indicate the element Si regardless of its oxidation state, zerovalent or oxidised.

A drawback of using a silicon-based electrochemically active material in an anode is its large volume expansion during charging, which is as high as 300% when the lithium ions are fully incorporated, e.g. by alloying or insertion, in the anode's active material - a process often called lithiation. The large volume expansion of the silicon-based materials during Li incorporation may induce stress in the silicon-based particles, which in turn could lead to a mechanical degradation of the silicon-based material. Repeated periodically during charging and discharging of the Li-ion battery, the repetitive mechanical degradation of the silicon-based electrochemically active material may reduce the life of a battery to an unacceptable level.

Further, a negative effect associated with silicon is that a thick SEI, a Solid-Electrolyte Interface, may be formed on the anode. An SEI is a complex reaction product of the electrolyte and lithium, and therefore leads to a loss of lithium availability for electrochemical reactions and therefore to a poor cycle performance, which is the capacity loss per charging-discharging cycle. A thick SEI may further increase the electrical resistance of a battery and thereby limit the achievable charging and discharging rates.

In principle, the SEI formation is a self-terminating process that stops as soon as a 'passivation layer' has formed on the surface of the silicon-based material. However, because of the volume expansion of silicon-based particles, both silicon-based particles and the SEI may be damaged during discharging (lithiation) and recharging (de-lithiation), thereby freeing new silicon surface and leading to a new onset of SEI formation

To solve the above-mentioned drawbacks, active material powders wherein the silicon-based particles are mixed with at least one component suitable to protect the silicon-based particles from electrolyte decomposition and to accommodate volume changes, are usually used. Such a component may be a carbon-based material, preferably forming a matrix.

Despite the use of such active material powders, there is still room for improvement of the performance of batteries containing Si-based anode materials.

In the art, the performance of a battery containing silicon-based anode materials is generally quantified by a so-called cycle life of a full-cell, which is defined as the number of times or cycles that a cell comprising such material can be charged and discharged until it reaches 80% of its initial discharge capacity. Most works on silicon-based anode materials are therefore focused on improving said cycle life.

It is an object of the present invention to provide a stable anode material, which once used in the negative electrode in the battery, is advantageous in that it allows reducing the swelling of the battery during cycling while maintaining a high first cycle coulombic efficiency.

**SUMMARY OF THE INVENTION**

This objective is achieved by providing a powder according to claim 1, which once used in the negative electrode of a battery, allows reducing the swelling of the battery during cycling while maintaining a high first cycle coulombic efficiency, without loss of specific capacity. By "a high first cycle coulombic efficiency", it is here meant a coulombic efficiency at first cycle at least equal to 82% in a full-cell.

The present invention concerns the following embodiments:

**Embodiment 1**

In a first aspect, the invention concerns a powder for use in a negative electrode of a battery, said powder comprising particles, said particles comprising a matrix material and silicon-based particles dispersed in said matrix material, said powder having a total specific volume of open porosity expressed in $cm^3/g$ and determined by nitrogen adsorption/desorption measurement of the powder, said powder having a total specific volume of closed porosity expressed in $cm^3/g$ and determined from a true density measurement of the powder using helium pycnometry; said powder wherein:

- the total specific volume of its open porosity is at least equal to 0.005 $cm^3/g$ and at most equal to 0.05 $cm^3/g$, and
- the total specific volume of its closed porosity is at least equal to 0.01 $cm^3/g$ and at most equal to 0.1 $cm^3/g$, and
- the ratio of the total specific volume of its open porosity over the total specific volume of its closed porosity is at least equal to 0.01 and at most equal to 0.99.

By "particles comprising a matrix material and silicon-based particles dispersed in said matrix material", it is meant that the particles comprised in the powder are, in average, larger in size than the silicon-based particles, since the particles comprise these latter. The particles comprised in the powder are typically of micrometric size, while the silicon-based particles are typically of nanometric size.
The silicon-based particles are covered in their majority, preferably in their entirety, by the matrix material. Hence, in the powder according to Embodiment 1, the silicon-based particles are preferably in contact only with each other and/or with the matrix material. The matrix material is preferably a continuous-phase matrix.
The silicon-based particles may have any shape, e.g. substantially spherical but also irregularly shaped, rod-shaped, plate-shaped, etc. In the silicon-based particles, the Si is present in its majority as silicon metal, to which minor amounts of other elements may have been added to improve properties, or which may contain some impurities, such as oxygen or traces of metals. When considering all elements except oxygen, the average Si content in such a silicon-based particle is preferably 80 weight % or more, and more preferably 90 weight % or more with respect to the total weight of the silicon-based particle.
By a powder for use in the negative electrode of a battery, it is meant an electrochemically active powder, comprising electrochemically active particles, that are able to store and release lithium ions, respectively during the lithiation and the delithiation of the negative electrode of a battery. Such a powder may equivalently be referred to as "active powder".
The total specific volume of open porosity of the powder, expressed in $cm^3/g$, should here be understood as the sum of the specific volume of all the pores present in the particles, relative to the mass of the powder, which are connected to the external surface of said particles and are therefore accessible, for example, to a gas ($N_2$, $CO_2$ or Helium for example) or a liquid. Those can for example be surface pits, cracks, cavities, etc. formed due to gas released during the synthesis, to cracks in the structure or to uneven surfaces.
The total specific volume of open porosity of the powder is determined by nitrogen adsorption/desorption measurement. It can also, in an equivalent way, be measured by mercury porosimetry.
The total specific volume of closed porosity of the powder, expressed in $cm^3/g$, should here be understood as the sum of the specific volume of all the pores present in the particles, relative to the mass of the powder, which are not connected to the external surface of said particles and are therefore not accessible, for example, to a gas or a liquid. Those can for example be formed due to internal stress, strain evolution and cracks in the structure, or gas released during the synthesis, the gas remaining trapped inside the pore.
The closed porosity of the powder is determined based on a true density measurement of the powder using helium pycnometry. The following formula (1) is used:

$$V_{powder} = V_{silicon} + V_{SiO_2} + V_{matrix} + V_{closed\ porosity}$$

$$V_{closed\ porosity} = \frac{1}{d_{powder}} - \frac{fraction\ silicon}{d_{silicon}} - \frac{fraction\ SiO_2}{d_{SiO_2}} - \frac{fraction\ matrix}{d_{matrix}} \quad (1),$$

where V stands for "specific volume" (in $cm^3/g$), d stands for "density" (in $g/cm^3$) and the fraction is a weight fraction.
In case other elements than silicon, $SiO_2$ and the matrix are present in the powder, their specific volumes also need to be subtracted from the specific volume of the powder, to get to the total specific volume of closed porosity.
For the purpose of illustrating, in a non-limitative way, the determination of the total specific volume of closed porosity, an example is provided below. In this illustrative example, the powder comprises 44 wt% of Si, 49 wt% of carbon (the matrix material in that example) and 7 wt% of oxygen. Assuming that all the oxygen is linked to the silicon, forming silicon oxide, the fraction of zerovalent silicon in the powder is 0.3786, the fraction of $SiO_2$ is 0.1314 and the fraction of carbon is 0.49. The true density of the powder, measured by helium pycnometry is 2.05 g/cm$^3$ and the theoretical densities of zerovalent silicon, $SiO_2$ and carbon are respectively 2.33 g/cm$^3$, 2.65 g/cm$^3$ and 1.97 g/cm$^3$. Applying formula (1), a total specific volume of closed porosity of 0.027 cm$^3$/g is obtained.

Further, the total specific volume of open porosity of the powder determined by nitrogen adsorption/desorption being equal to 0.025 cm$^3$/g, the ratio of the total specific volume of its open porosity over the total specific volume of its closed porosity is equal to 0.926.

It is important for the powder to have a total specific volume of open porosity at least equal to 0.005 cm$^3$/g, preferably at least equal to 0.01 cm$^3$/g, more preferably at least equal to 0.015 cm$^3$/g, because a too low specific volume of open porosity would limit the wetting of the particles by the electrolyte in the battery and therefore limit the diffusion of lithium ions, which may lead to lower capacities, in particular at high charging/discharging currents.

It is also important to have a total specific volume of open porosity at most equal to 0.05 cm$^3$/g, preferably at most equal to 0.04 cm$^3$/g, more preferably at most equal to 0.03 cm$^3$/g, because a too high specific volume of open porosity would lead to a too high surface of the particles being exposed to the electrolyte in the battery, therefore creating a thicker Solid Electrolyte Interface layer, leading to a reduced coulombic efficiency at the initial cycle.

It is important for the powder to have a total specific volume of closed porosity at least equal to 0.01 cm$^3$/g, preferably at least equal to 0.015 cm$^3$/g, more preferably at least equal to 0.020 cm$^3$/g, because a too low total specific volume of closed porosity would result in a too limited effect on the swelling of the electrode during cycling. The closed porosity present inside the particles, when present in a sufficient specific volume, will partially absorb the swelling due to the lithiation of the silicon-based particles, thereby limiting the electrode swelling.

It is also important to have a total specific volume of closed porosity at most equal to 0.1 cm$^3$/g, preferably at most equal to 0.06 cm$^3$/g, more preferably at most equal to 0.04 cm$^3$/g, because a too high specific volume of closed porosity may lead to a too fragile particle structure, which would lead to the formation of large cracks upon lithiation/delithiation and eventually to a particle breakage, leading to silicon-based particles being exposed to the electrolyte, additional SEI formation and thus a reduced capacity retention.

Additionally, it is important that the total specific volume of closed porosity of the powder is larger than its total specific volume of open porosity, since the benefits of the presence of closed porosity are higher than the benefits of the presence of open porosity. Hence, the ratio of the total specific volume of open porosity of the powder over the total specific volume of its closed porosity should be inferior to 1, preferably superior or equal to 0.01 and inferior or equal to 0.99, more preferably superior or equal to 0.2 and inferior or equal to 0.9 and even more preferably superior or equal to 0.38 and inferior or equal to 0.79.

Finally, it is particularly preferred for the powder according to the invention to combine the required range of total specific volume of open porosity, with the required range of total specific volume of closed porosity and the required range of the ratio of the total specific volume of open porosity over the total specific volume of closed porosity. Only when these three conditions are met, the technical effect, which is a reduced swelling of the battery during cycling while maintaining a high first cycle coulombic efficiency, can be obtained.

**Embodiment 2**

In a second embodiment according to **Embodiment 1,** the powder has:

- the total specific volume of its open porosity at least equal to 0.01 cm$^3$/g and at most equal to 0.04 cm$^3$/g, and
- the total specific volume of its closed porosity at least equal to 0.015 cm$^3$/g and at most equal to 0.06 cm$^3$/g, and
- the ratio of the total specific volume of its open porosity over the total specific volume of its closed porosity at least equal to 0.2 and at most equal to 0.9.

**Embodiment 3**

In a third embodiment according to **Embodiment 1 or 2,** the powder has:

- the total specific volume of its open porosity at least equal to 0.015 cm$^3$/g and at most equal to 0.03 cm$^3$/g, and
- the total specific volume of its closed porosity at least equal to 0.02 cm$^3$/g and at most equal to 0.04 cm$^3$/g, and
- the ratio of the total specific volume of its open porosity over the total specific volume of its closed porosity at least equal to 0.38 and at most equal to 0.79.

**Embodiment 4**

In a fourth embodiment according to any one of the **Embodiments 1** to **3,** the silicon-based particles comprised in the particles are characterized by a number-based size distribution having a d50, the d50 being larger than or equal to 40 nm and smaller than or equal to 150 nm.

The number-based size distribution is based on a visual analysis, with or without assistance of an image analysis program, of a minimum number of silicon-based particles comprised in the powder or the composite powder. This minimum number of silicon-based particles is at least 1000 particles. An example of a determination of a number-based fraction of particles is provided in the "Analytical methods" section.

For the sake of clarity, a d50 of 100 nm for example, would here mean that 50% in number of the at least 1000 silicon-based particles have a size smaller than 100 nm and that 50% in number of the at least 1000 silicon-based particles have a size larger than 100 nm.

Silicon-based particles having a number-based size distribution with a d50 lower than 40 nm are very difficult to disperse efficiently in the matrix material, which may decrease the electronic conductivity of the powder.

Silicon-based particles having a number-based size distribution with a d50 larger than 150 nm are more subject to fractures during their lithiation, causing a dramatic reduction of the cycle life of a battery containing such a powder.

It is considered that the d50 is not affected by the process for making the powder or the composite powder, which means that the d50 value of the silicon-based powder used as precursor in the process is the same as the d50 value of the silicon-based particles comprised in the powder.

**Embodiment 5**

In a fifth embodiment according to any one of the **Embodiments 1** to **4,** the silicon-based particles comprised in the particles have a chemical composition having at least 70% by weight of Si, preferably at least 80% by weight of Si. Preferably, the silicon-based particles are free of other elements than Si and O, to avoid a too low specific capacity of the silicon-based particles.

**Embodiment 6**

In a sixth embodiment according to any one of the **Embodiments 1** to **5,** the powder has a Si content A expressed in weight percent (wt%), wherein 10 wt% $\leq$ A $\leq$ 60 wt%.

A too low Si content would result in a too limited specific capacity and would therefore not allow to reach a high energy density for the battery. A too high Si content would lead to difficulties to effectively disperse the silicon-based particles within the matrix material and would lead to a too large swelling of the electrode upon lithiation/delithiation.

**Embodiment 7**

In a seventh embodiment according to any one of the **Embodiments 1** to **6,** the powder has a Si content A and an oxygen content B, both expressed in weight percent (wt%), wherein B $\leq$ 0.3 x A, preferably B $\leq$ 0.2 x A, more preferably B $\leq$ 0.15 x A and particularly more preferably B $\leq$ 0.1 x A.

A powder having a too high oxygen content would suffer from an additional irreversible consumption of lithium by the formation of lithium oxide ($Li_2O$) during the first lithiation of the powder, thus reducing the initial coulombic efficiency of a battery containing such a powder.

**Embodiment 8**

In an eighth embodiment according to any one of the **Embodiments 1** to **7,** the particles of the powder have a volume-based particle size distribution having a D10, a D50 and a D90, with 1 $\mu$m $\leq$ D10 $\leq$ 10 $\mu$m, 8 $\mu$m $\leq$ D50 $\leq$ 25 $\mu$m and 10 $\mu$m $\leq$ D90 $\leq$ 40 $\mu$m.

**Embodiment 9**

In a nineth embodiment according to any one of the **Embodiments 1** to **8,** the powder has a BET surface area which is at most 10 m$^2$/g and preferably at most 5 m$^2$/g.

It is important for the powder to have a low BET specific surface area, to decrease the surface of electrochemically active particles in contact with the electrolyte, in order to limit the Solid Electrolyte Interphase (SEI) formation, which consumes lithium, and thus to limit the irreversible loss of capacity of a battery containing such a powder.

**Embodiment 10**

In a tenth embodiment according to any one of the **Embodiments 1** to **9,** the matrix material is carbon. The carbon preferably results from the thermal decomposition of at least one of the following materials: polyvinyl alcohol (PVA), polyvinyl chloride (PVC), sucrose, coal-tar pitch, petroleum pitch, lignin, and a resin.

**Embodiment 11**

In an eleventh embodiment according to **Embodiment 10,** the powder has a carbon content C expressed in weight percent (wt%), wherein 22 wt% $\leq$ C $\leq$ 88.5 wt%.
When the carbon content in the powder is lower than 22 wt%, the carbonaceous matrix material is not present in an amount sufficient to fully cover the silicon-based particles, therefore leading to an increased electrolyte decomposition at the surface of the silicon-based particles and thus to an increased SEI formation. When the carbon content in the powder is higher than 88.5 wt%, the specific capacity of the powder is too low.

**Embodiment 12**

In a twelfth embodiment according to any of the **Embodiments 1** to **11,** the invention further concerns a battery comprising any of the variants of powder as defined above, wherein preferably the battery has a negative electrode, wherein the powder is present in the negative electrode.

**Embodiment 13**

In a thirteenth embodiment according to any of the **Embodiments 1** to **11,** the invention finally concerns a method for preparing any of the variants of powder as defined above. The method comprises the following steps.
In a step A, silicon-based particles are provided. In a step B, a thermosetting polymer is dissolved in an appropriate solvent to obtain a solution and the silicon-based particles are dispersed in said solution to obtain a dispersion. Preferably, the solvent in step B is isobutanol, since it allows obtaining a very stable dispersion of silicon-based particles. In a step C, the solvent is removed from the dispersion to obtain a powder of silicon-based particles covered by the thermosetting polymer and then the powder is cured, to obtain a cured powder. In a step D, the cured powder is milled to obtain a sub-micrometric cured powder. In a step E, the sub-micrometric cured powder is mixed with a carbon precursor to obtain a mixture and then the mixture is thermally treated, thereby effecting a thermal decomposition of the carbon precursor. The carbon precursor is preferably at least one of the following materials: polyvinyl alcohol (PVA), polyvinyl chloride (PVC), sucrose, coal-tar pitch, petroleum pitch, lignin, and a resin. In a step F, the powder obtained at step E is milled and subsequently sieved, to obtain a final powder.

**Embodiment 14**

In a fourteenth embodiment according to **Embodiment 13,** the thermosetting polymer is one of or a combination of a melamine-based polymer, a phenol-based polymer, a urethane-based polymer, an ester-based polymer, an epoxy-based polymer and their derivatives. Preferably, the thermosetting polymer is a phenol formaldehyde resin.

**Embodiment 15**

In a fifteenth embodiment according to **Embodiment 13 or 14,** the curing at step C is performed at a temperature of at most 200°C and preferably at a temperature of at most 150°C, to prevent the oxidation of the silicon-based particles.

**BRIEF DESCRIPTION OF THE FIGURES**

**Figure 1.** Schematic illustration of a particle comprised in the powder. Particle (1), silicon-based particle (2), matrix material (3), open porosity (4), closed porosity (5).

**Figure 2.** Schematic illustration of the set-up used to measure the swelling of the battery. 1. Connection from the pouch-cell to the battery tester 2. Measuring device 3. Stand 4. Displacement sensor 5. Pouch-cell 6. Metallic plates

## DETAILED DESCRIPTION

In the drawings and the following detailed description, preferred embodiments are described in detail to enable practice of the invention. Although the invention is described with reference to these specific preferred embodiments, it will be understood that the invention is not limited to these preferred embodiments. But to the contrary, the invention includes numerous alternatives, modifications and equivalents as will become apparent from consideration of the following detailed description and accompanying drawings.

### Analytical methods used

Determination of the total specific volume of open porosity

The true density of the powders in the examples and the counterexamples is determined by the following method, using a nitrogen adsorption/desorption analysis (Micromeritics Tristar 3020). The powder is introduced into a sample tube and undergoes preparation (heating, vacuum or $N_2$ gas flushing) to remove all foreign molecules from the powder surface and from the sample tube.

It is then cooled to liquid $N_2$ temperature, where $N_2$ adsorption occurs on the powder particles. This adsorption is measured at a relative pressure of 0.10 to 0.99 ($P/P_0$). Then the relative pressure drops back so that $N_2$ desorption occurs on the powder particles. This is measured at a relative pressure of 0.99 to 0.10 ($P/P_0$). This way the BJH pore size distribution curve is obtained. Finally, the total specific volume of open porosity is calculated.

Alternatively, the total specific volume of open porosity can be determined with a mercury porosimeter (Micromeritics Autopore IV, Micromeritics, Georgia, USA). Measurements of intruded volume of mercury versus applied pressure are obtained, and the pressures are converted into pore sizes using the Washburn equation.

Determination of the true density

The true density of the powders in the examples and the counterexamples is determined by the following method, using a helium pycnometry analysis (Micromeritics AccPyc 1340). An inert gas, in this case helium, is used as the displacement medium. The sample is placed in a sealed cup of a known volume. This cup is then placed into the sample chamber. Helium is introduced in the sample chamber and then expanded into a second empty chamber with a known volume. The pressure observed after filling the sample cell and the pressure discharged into the expansion chamber are measured, and then the corresponding volume is calculated. The true density is determined by dividing the sample weight by the calculated volume. Since helium cannot access the closed porosity, it is included into the total specific volume of the powder. Hence the formula to determine the specific volume of a powder comprising silicon-based particles embedded in a matrix material is:

$$V_{powder} = V_{silicon} + V_{SiO_2} + V_{matrix} + V_{closed\ porosity}$$

Determination of the Si content

The Si content of the powders in the examples and the counterexamples is measured by X-Ray Fluorescence (XRF) using an energy dispersive spectrometer. This method has an experimental random error of +/- 0.3 wt% Si.

Determination of the oxygen content

The oxygen contents of the powders in the examples and the counterexamples are determined by the following method, using a Leco TC600 oxygen-nitrogen analyzer. A sample of the powder is put in a closed tin capsule that is put itself in a nickel basket. The basket is put in a graphite crucible and heated under helium as carrier gas to above 2000°C. The sample thereby melts and oxygen reacts with the graphite from the crucible to CO or $CO_2$ gas. These gases are guided into an infrared measuring cell. The observed signal is recalculated to an oxygen content.

Determination of the carbon content

The carbon content of the powders in the examples and the counterexamples is determined by the following method, using a Leco CS230 carbon-sulfur analyzer. The sample is melted in a constant oxygen flow in a ceramic crucible in a high frequency furnace. The carbon in the sample reacts with the oxygen gas and leaves the crucible as CO or $CO_2$. After conversion of an eventual presence of CO into $CO_2$, all produced $CO_2$ is finally detected by an infrared detector. The signal is finally converted into a carbon content.

Determination of the specific surface area (BET)

The specific surface area is measured with the Brunauer-Emmett-Teller (BET) method using a Micromeritics Tristar 3000. 2g of the powder to be analyzed is first dried in an oven at 120°C for 2 hours, followed by $N_2$ purging. Then the powder is degassed in vacuum at 120°C for 1 hour prior to the measurement, in order to remove adsorbed species.

Determination of the electrochemical performance

The electrochemical performance of the powders in the examples and the counterexamples is determined by the following method.

The powders to be evaluated are sieved using a 45 $\mu$m sieve and mixed with carbon black, carbon fibers and sodium carboxymethyl cellulose binder in water (2.5 wt%). The ratio used is 89 weight parts active material powder / 1 weight part carbon black (C65) / 2 weight parts carbon fibers (VGCF) and 8 weight parts carboxymethyl cellulose (CMC). These components are mixed in a Pulverisette 7 planetary ball mill for 30 minutes at 250 rpm.

A copper foil cleaned with ethanol is used as current collector for the negative electrode. A 200 $\mu$m thick layer of the mixed components is coated on the copper foil. The coating is dried for 45 minutes in vacuum at 70°C. A 13.86 $cm^2$ rectangular shaped electrode is punched from the dried coated copper foil, dried overnight at 110°C under vacuum and used as negative electrode in a pouch-cell.

The positive electrode is prepared as follows: a commercial $LiNi_{3/5}Mn_{1/5}Co_{1/5}O_2$ (NMC 622) powder is mixed with carbon black (C65), carbon fibers (VGCF) and a solution of 8 wt% polyvinylidene difluoride (PVDF) binder in N-Methyl-2-pyrrolidone (NMP). The ratio used is 92 weight parts of a commercial NMC 622 powder / 1 weight part carbon black / 3 weight parts carbon fibers and 4 weight parts PVDF. The components are mixed in a Pulverisette 7 planetary ball mill for 30 minutes at 250 rpm. An aluminum foil cleaned with ethanol is used as current collector for the positive electrode. A layer of the mixed components is coated on the aluminum foil, with a thickness ensuring a ratio negative electrode capacity over positive electrode capacity of 1.1. The coating is dried for 45 minutes in vacuum at 70°C. A 11.02 $cm^2$ rectangular shaped electrode is punched from the dried coated aluminum foil, dried overnight at 110°C under vacuum and used as positive electrode in a pouch-cell.

The electrolyte used is 1M $LiPF_6$ dissolved in EC/DEC solvents (1/1 in volume) + 2 wt% VC + 10 wt% FEC additives.

The assembled pouch-cells are then tested using the procedure described below, where the first cycle corresponds to the conditioning of the battery and where "CC" stands for "constant current" and "CCCV" stands for "constant current constant voltage".

- Cycle 1:

  ◦ Rest 4h (Initial rest)
  ◦ Charge at C/40 until 15% of theoretical cell capacity
  ◦ Rest 12h
  ◦ CC charge at C/20 to 4.2V
  ◦ CC discharge at C/20 to 2.7V

- From cycle 2 on:

  ◦ CC charge at C/2 to 4.2V, then CV charge until C/50
  ◦ CC discharge at C/2 to 2.7V

The coulombic efficiency (CE) of the pouch-cell, being the ratio of the capacity at discharge to the capacity at charge at a given cycle, is calculated for the initial cycle. The initial cycle is the most important one in terms of coulombic efficiency, since the reaction of SEI formation has a huge impact on the CE. For industrial applications, it is necessary for a pouch-cell to reach a coulombic efficiency at first cycle at least equal to 82%.

Furthermore, it is well established that a cycle life of at least 150 cycles in such a pouch-cell is required for an anode material with a specific capacity of about 1300 mAh/g, in view of a commercial application. These high capacity powders may be further diluted during the negative electrode preparation, for example with graphite, to capacities of 600-700 mAh/g to achieve a cycle life beyond 300 cycles.

Determination of the swelling of the battery

In the following, "battery", "cell" and "pouch-cell" are all synonyms.
By swelling, or volume change, of the battery, or of the anode, it is here meant the variations of the thickness of the battery, or the anode, during the cycles of charge and discharge. Since the swelling of the cathode is very limited and since the same cathode is used in all batteries disclosed in this current application, the swelling of the battery is directly correlated to the swelling of the anode. As a consequence, the maximum state of the swelling (thickness of the battery at its maximum) is reached at the end of the charge of the battery, which corresponds to the maximum lithiation of the anode, whereas the minimum state of the swelling (thickness of the battery at its minimum, except for its initial state after assembling) is reached at the end of the discharge of the battery, which corresponds to the maximum delithiation of the anode.

The swelling of the batteries comprising the powders in the examples and the counterexamples as anode material, are determined by the following method.

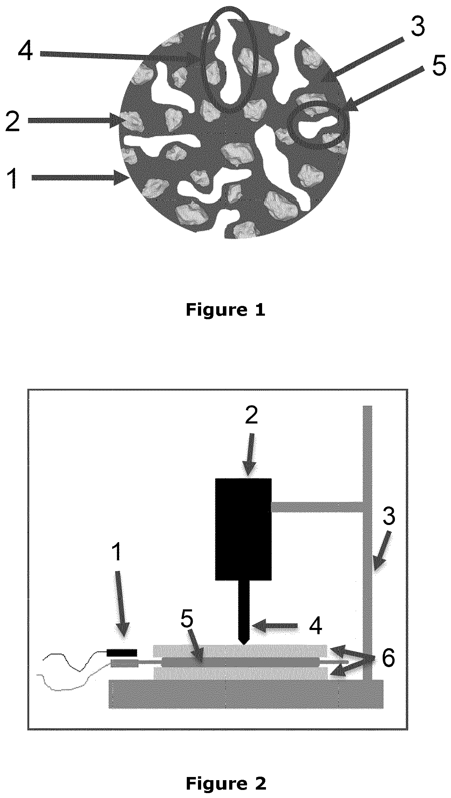

Pouch-cells containing the different powders to be evaluated, are assembled following the method previously described. All anodes comprise powders, or mixtures of powders and graphite, with similar specific capacities, namely around 1300 mAh/g. All anodes have similar loadings and densities, namely around 5.5 mg/cm$^2$ and 1.4 g/cm$^3$ respectively. Only the nature of the powder in the anode varies in these pouch-cells.
The thickness of each pouch-cell (5) is first measured, before it is introduced in the set-up as described in Figure 2. The metallic plates (6) ensure that a homogeneous and constant external pressure is applied on the pouch-cell during the whole measurement; for all the measurements the pressure applied was 7 psi. The displacement sensor (4) is placed in contact with the upper metallic plate and the displacement value on the measuring device (2) is set on 0 $\mu$m. The measuring device (2) has a precision of 0.1 $\mu$m. The pouch-cell is connected to the battery tester using crocodile clamps (1). The pouch-cell is then cycled using the procedure described below, where "CC" stands for "constant current" and "CV" stands for "constant voltage".

- 24h rest phase to get a stable thickness value
- Cycle 1 (conditioning)

  ◦ CC charge at 0.025C until 15% of theoretical cell capacity is reached
  ◦ Rest 12h
  ◦ CC charge at 0.05C to 4.2V, then CV charge until 0.02C
  ◦ Rest 5 min
  ◦ CC discharge at 0.05C to 2.7V

- Cycle 2

  ◦ Rest 5 minutes
  ◦ CC charge at 0.1C to 4.2V, then CV charge until 0.02C
  ◦ Rest 5 min
  ◦ CC discharge at 0.1C to 2.7V

- Cycles 3 and 4

  ◦ Rest 5 minutes
  ◦ CC charge at 0.2C to 4.2V, then CV charge until 0.02C
  ◦ Rest 5 min
  ◦ CC discharge at 0.2C to 2.7V

- Cycle 5

  ◦ Rest 5 minutes
  ◦ CC charge at 0.1C to 4.2V, then CV charge until 0.02C
  ◦ Rest 5 min
  ◦ CC discharge at 0.1C to 2.7V

The recorded data are then extracted and processed to plot the evolution of the swelling of the pouch-cell in function of time. The displacement, or swelling, measured at the end of the charge of the 5th cycle is used to compare the performance of the powders comprised in the anodes. As an illustration, if the thickness of the battery before cycling is equal to 50 μm and the thickness at the end of the charge of the 5th cycle is equal to 70 μm, the swelling of the battery is equal to 40%.

Determination of the number-based size distribution of the silicon-based particles

The number-based size distribution of the silicon-based particles, comprised in the powders according to the invention is determined via an electron microscopy analysis (SEM or TEM) of a cross-section of the powder, combined with an image analysis, preferably assisted by an image analysis program.

To perform the analysis using a SEM equipment, the sample preparation is performed as follows. 500 mg of the powder to be analyzed is embedded in 7g of a resin (Buehler EpoxiCure 2) consisting of a mix of 4 parts Epoxy Resin (20-3430-128) and 1 part Epoxy Hardener (20-3432-032). The resulting sample of 1" diameter is dried during at least 8 hours. It is then polished, first mechanically using a Struers Tegramin-30 until a thickness of maximum 5 mm is reached, and then further polished by ion-beam polishing (Cross Section Polisher Jeol SM-09010) for about 6 hours at 6 kV, to obtain a polished surface. A carbon coating is finally applied on this polished surface by carbon sputtering using a Cressington 208 carbon coater for 12 seconds, to obtain the sample, also called "cross-section", that will be analyzed by SEM.

For the purpose of illustrating, in a non-limitative way, the determination of the size distribution of the silicon-based particles, comprised in the powder, a SEM-based procedure is provided below.

1. Multiple SEM images of the cross-section of the powder comprising multiple cross-sections of silicon-based particles are acquired.

2. The contrast and brightness settings of the images are adjusted for an easy visualization of the cross-sections of the different constituents of the particles, i.e. in particular the matrix material and the silicon-based particles. Due to their different chemical composition, the difference in brightness allows for an easy distinction between them.

3. At least 100 discrete cross-sections of silicon-based particles, not overlapping with another cross-section of a silicon-based particle, are selected from one or several of the acquired SEM image(s), using a suitable image analysis program. These discrete cross-sections may be selected from one or more cross-sections of the powder comprising the particles.

4. $d_{max}$ values, corresponding to the linear distance between the two most distant points on the periphery of the cross-section of a silicon-based particle, of the at least 100 discrete cross-sections of the silicon-based particles, are measured.

The d10, d50 and d90 values of the number-based particle size distribution of silicon-based particles, determined using the method described above, are then calculated. These number-based particle size distributions can be readily converted to a weight- or a volume-based particle size distribution via well-known mathematical equations.

Determination of the particle size of the powders

The volume-based particle size distribution of the powders is determined with a laser diffraction particle size analyzer Malvern Mastersizer 2000. The following measurement conditions are selected: compressed range; active beam length 2.4 mm; measurement range: 300 RF; 0.01 to 900 μm. The sample preparation and measurement are carried out in accordance with the manufacturer's instructions.

**Experimental preparation of counterexamples and examples**

Counterexample 1 (CE1), not according to the invention

A silicon-based powder is first obtained by applying a 60kW radio frequency (RF) inductively coupled plasma (ICP), using argon as plasma gas, to which a micron-sized silicon powder precursor is injected at a rate of circa 50 g/h, resulting in a prevalent (i.e. in the reaction zone) temperature above 2000K. In this first process step, the precursor becomes totally vaporized. In a second process step, an argon flow of 18 Nm$^3$/h is used as quench gas immediately downstream of the reaction zone in order to lower the temperature of the gas below 1600K, causing a nucleation into metallic submicron silicon powder. Finally, a passivation step is performed at a temperature of 100°C during 5 minutes by adding 100 l/h of a $N_2/O_2$ mixture containing 1 mole% oxygen.

The specific surface area (BET) of the obtained silicon-based powder is measured to be 83 m$^2$/g. The oxygen content of the obtained silicon-based powder is measured to be 8.6 wt%. The volume-based particle size distribution of the silicon-based powder is determined to be: d10 = 61 nm, d50 = 113 nm and d90 = 199 nm.

Then, a blend is made of 26g of the obtained silicon-based powder and 40g of a petroleum-based pitch powder having a softening point of 180°C. The blend is fed under a nitrogen flow at a feed rate of 500g/h into a twin-screw extruder, operated at a temperature of 230°C.

The mixture of the silicon-based powder in pitch thus obtained is cooled under $N_2$ to room temperature and, once solidified, pulverized and sieved on a 400-mesh sieve, to produce an intermediate powder. 20g of the intermediate powder is then mixed with 7g of graphite, for 3 hours on a roller bench, after which the obtained mixture is passed through a mill to deagglomerate it. At these conditions good mixing is obtained but the graphite particles do not become embedded in the pitch.

A thermal after-treatment is further given to the obtained mixture of the intermediate powder and the graphite as follows: the product is put in a quartz crucible in a tube furnace, heated up at a heating rate of 3°C/min to 1000°C, kept at that temperature for two hours and then cooled down to room temperature. All this is performed under argon atmosphere. The fired product is finally manually crushed in a mortar and sieved over a 325-mesh sieve to form a final powder CE1.

The total Si content in powder CE1 is measured to be 34.2 wt% by XRF, having an experimental error of +/- 0.3 wt%. This corresponds to a calculated value based on a weight loss of the pitch upon heating of circa 35 wt% and an insignificant weight loss upon heating of the other components. The weight ratio of carbon coming from pitch decomposition over Si is approximately 1. The oxygen content of powder CE1 is measured to be 3.3 wt%. The specific surface area (BET) of powder CE1 is measured to be 4.0 m$^2$/g. The volume-based particle size distribution of powder CE1 has a D10 equal to 4.1 $\mu$m, a D50 equal to 13.4 $\mu$m and a D90 equal to 28.9 $\mu$m. Additional physico-chemical properties of powder CE1 are given in Table 1.

A cross-section of powder CE1 is performed and analyzed by SEM no apparent porosity can be detected in the resulting microscopy images.

Counterexample 2 (CE2), not according to the invention

The same silicon-based powder as for powder CE1 is used in the synthesis of powder CE2. In order to produce powder CE2, a blend is made of 26 g of the mentioned silicon-based powder and a thermosetting polymer. The weight ratio thermosetting polymer over Si is 0.3. The polymer used is a phenol-formaldehyde resin. The blend is further placed in an aerated oven, where the thermoset polymer is cured at a temperature of 150°C. The obtained cured powder is subsequently bead-milled into sub-micron particles. The milled silicon-polymer particles are further blended with 40 g of a petroleum-based pitch powder having a softening point of 180°C. The blend is fed under a nitrogen flow at a feed rate of 500g/h into a twin-screw extruder, operated at a temperature of 230°C.

The mixture of the silicon-based powder in pitch thus obtained is cooled under $N_2$ to room temperature and, once solidified, pulverized and sieved on a 400-mesh sieve, to produce an intermediate powder.

20g of the intermediate powder is then mixed with 4.5 g of graphite, for 3 hours on a roller bench, after which the obtained mixture is passed through a mill to deagglomerate it. At these conditions good mixing is obtained but the graphite particles do not become embedded in the pitch.

A thermal after-treatment is further given to the obtained mixture of the intermediate powder and the graphite as follows: the product is put in a quartz crucible in a tube furnace, heated up at a heating rate of 3°C/min to 1000°C, kept at that temperature for two hours and then cooled down to room temperature. All this is performed under argon atmosphere. The thermosetting polymer present in the mixture decomposes without going through a real melting step and, as a consequence, leaves pores inside the carbon matrix created during the heat-treatment.

The fired product is finally manually crushed in a mortar and sieved over a 325-mesh sieve to form a final powder CE2.

The total Si content in powder CE2 is measured to be 34.1 wt% by XRF. This corresponds to a calculated value based on a weight loss of the pitch upon heating of circa 35 wt% and on a weight loss of the phenol-formaldehyde resin of circa 40 wt%. The weight ratio of carbon coming from pitch decomposition over Si is approximately 1. Additional physico-chemical properties of powder CE2 are given in Table 1.

Counterexample 3 (CE3), not according to the invention

The same method as the one used for producing powder CE2 is used to produce powder CE3. The differences are the weight ratio thermosetting polymer over Si, which is increased to 0.9 (instead of 0.3) and the quantity of graphite added to the intermediate powder which is reduced to 1 g (instead of 4.5 g). The total Si content in powder CE3 is measured to be 34.3 wt% by XRF. Additional physico-chemical properties of powder CE3 are given in Table 1.

Example 1 (E1), according to the invention

The same silicon-based powder as for powder CE1 is used in the synthesis of powder E1. In order to produce powder E1, a dispersion is made of 26 g of the mentioned silicon-based powder and a thermosetting polymer dissolved in isobutanol. The weight ratio thermosetting polymer over Si is 0.3. The polymer used is a phenol-formaldehyde resin.

Once a good dispersion is obtained, a spray-drying step is carried out to remove the solvent. The obtained dry powder consists of silicon-based nanoparticles covered by the thermosetting polymer.

The dry powder is further placed in an aerated oven, where the thermoset polymer is cured at a temperature of 150°C. The obtained cured powder is subsequently bead-milled into sub-micron particles. The milled silicon-polymer particles are further blended with 40 g of petroleum-based pitch powder.

The remaining steps, i.e. the melting of the pitch, the production of the intermediate powder, the mixing with graphite, the thermal treatment and the final crushing, are performed exactly as for powder CE1.

The total Si content in powder E1 is measured to be 34.1 wt% by XRF. The weight ratio of carbon coming from pitch decomposition over Si is approximately 1. Additional physico-chemical properties of powder E1 are given in Table 1.

Example 2 (E2), according to the invention

The same method as the one used for producing powder E1 is used to produce powder E2. The differences are the weight ratio thermosetting polymer over Si, which is increased to 0.5 (instead of 0.3) and the quantity of graphite added to the intermediate powder which is reduced to 3 g (instead of 4.5 g).

The total Si content in powder E2 is measured to be 34.4 wt% by XRF. The weight ratio of carbon coming from pitch decomposition over Si is approximately 1. Additional physico-chemical properties of powder E2 are given in Table 1.

Example 3 (E3), according to the invention

The same method as the one used for producing powder E1 is used to produce powder E3. The differences are the weight ratio thermosetting polymer over Si, which is increased to 0.7 (instead of 0.3) and the quantity of graphite added to the intermediate powder which is reduced to 2 g (instead of 4.5 g).

The total Si content in powder E2 is measured to be 34.3 wt% by XRF. The weight ratio of carbon coming from pitch decomposition over Si is approximately 1. Additional physico-chemical properties of powder E3 are given in Table 1.

Example 4 (E4), according to the invention

The same method as the one used for producing powder E1 is used to produce powder E4. The differences are the weight ratio thermosetting polymer over Si, which is increased to 0.9 (instead of 0.3) and the quantity of graphite added to the intermediate powder which is reduced to 1 g (instead of 4.5 g).

The total Si content in powder E2 is measured to be 34.3 wt% by XRF. The weight ratio of carbon coming from pitch decomposition over Si is approximately 1. Additional physico-chemical properties of powder E3 are given in Table 1.

**Table 1:** Summary of the synthesis parameters

| Table 1 | | | | |
|---|---|---|---|---|
| Powder | Weight ratio thermosetting polymer/Si | Polymer added as | Curing temperature (°C) | Weight ratio C from pitch over Si |
| CE1 | 0 | / | / | 1 |
| CE2 | 0.3 | blended with Si | 150 | 1 |
| CE3 | 0.9 | blended with Si | 150 | 1 |
| E1 | 0.3 | dispersion with Si | 150 | 1 |
| E2 | 0.5 | dispersion with Si | 150 | 1 |
| E3 | 0.7 | dispersion with Si | 150 | 1 |
| E4 | 0.9 | dispersion with Si | 150 | 1 |

**Table 2:** Porosity properties of the powders

| Table 2 | | | |
| --- | --- | --- | --- |
| Powder | Total specific volume of open porosity ($cm^3$/g) | Total specific volume of closed porosity ($cm^3$/g) | Ratio open/closed porosity |
| CE1 | 0.004 | 0.0006 | 6.67 |
| CE2 | 0.021 | 0.014 | 1.50 |
| CE3 | 0.038 | 0.032 | 1.19 |
| E1 | 0.016 | 0.023 | 0.70 |
| E2 | 0.015 | 0.032 | 0.47 |
| E3 | 0.016 | 0.046 | 0.35 |
| E4 | 0.015 | 0.059 | 0.25 |

The particle size distribution, oxygen content and BET values of powders CE2, CE3, E1, E2, E3 and E4 are comparable to the ones of powder CE1.

All powders are further evaluated in full-cells, both to measure the coulombic efficiency at first cycle and the swelling of the battery, applying the procedures previously described. All powders have specific capacities of 1300 mAh/g ± 20 mAh/g. The results are reported in Table 3.

**Table 3:** Performance of the powders in full-cells

| Table 3 | | |
| --- | --- | --- |
| Powder | Coulombic efficiency at first cycle (%) | Battery swelling at end of 5$^{th}$ cycle charge (%) |
| CE1 | 83.5 | 40.6 |
| CE2 | 81.6 | 37.2 |
| CE3 | 78.4 | 32.4 |
| E1 | 83.3 | 30.5 |
| E2 | 83.1 | 29.8 |
| E3 | 82.9 | 31.2 |
| E4 | 82.7 | 31.9 |

Regarding the coulombic efficiency at first cycle, the cell comprising the powder having the lowest total specific volume of open porosity (i.e. CE1) performs the best. Still the cells comprising powders E1-E4, according to the invention, also perform well in that regard, since they all have a coulombic efficiency at first cycle at least equal to 82%.

Regarding the battery swelling at the end of the charge at cycle 5, the best results are by far obtained for powders E1-E4, according to the invention. The swelling is considerably reduced compared to the swelling obtained with powders not according to the invention. The fact that, for example, powder E1 leads to a much lower swelling of the battery than powder CE2, although they are both produced using the same amount of thermosetting polymer, is probably due to the way the thermosetting polymer is mixed with the silicon-based powder, i.e. as a dispersion for powder E1 vs. as a simple blend for powder CE2. This has two effects.

First, as already mentioned, when the thermosetting polymer is mixed as a dispersion, the obtained dry powder consists of silicon-based particles covered by the thermosetting polymer. During the thermal treatment, the pores will therefore form around the silicon-based particles and the swelling due to the silicon particles will be absorbed more efficiently, whereas the pores will form randomly in the particles when the thermosetting is simply blended, leading to a less efficient absorption of the swelling.

Secondly, because the pores form around the silicon particles embedded in the matrix material when the thermosetting polymer is mixed as a dispersion, it is mainly closed porosity that is produced. Whereas, when the thermosetting polymer is simply blended and the pores are formed randomly in the particles, it also leads to the formation of more open porosity and less closed porosity and therefore to a less efficient absorption of the swelling.

Finally, it might be surprising to observe that the swelling does not decrease linearly with the increase of the total specific volume of closed porosity. A reason may be that, exceeding a certain specific volume of closed porosity, the structural instability of the particles becomes the dominant factor, due to the formation of cracks in the particles, as already mentioned previously.

Overall, the best compromise regarding the performance in battery, is obtained for powders E1 and E2.

**Claims**

1. A powder for use in a negative electrode of a battery, said powder comprising particles, said particles comprising a matrix material and silicon-based particles dispersed in said matrix material, said powder having a total specific volume of open porosity expressed in $cm^3/g$ and determined by nitrogen adsorption/desorption measurement, said powder having a total specific volume of closed porosity expressed in $cm^3/g$ and determined from a true density measurement using helium pycnometry;
said powder being **characterized in that**:

   - the total specific volume of its open porosity is at least equal to 0.005 $cm^3/g$ and at most equal to 0.05 $cm^3/g$, and
   - the total specific volume of its closed porosity is at least equal to 0.01 $cm^3/g$ and at most equal to 0.1 $cm^3/g$, and
   - the ratio of the total specific volume of its open porosity over the total specific volume of its closed porosity is at least equal to 0.01 and at most equal to 0.99.

2. A powder according to claim 1, wherein:

   - the total specific volume of its open porosity is at least equal to 0.01 $cm^3/g$ and at most equal to 0.04 $cm^3/g$, and
   - the total specific volume of its closed porosity is at least equal to 0.015 $cm^3/g$ and at most equal to 0.06 $cm^3/g$, and
   - the ratio of the total specific volume of its open porosity over the total specific volume of its closed porosity is at least equal to 0.2 and at most equal to 0.9.

3. A powder according to claim 1, wherein:

   - the total specific volume of its open porosity is at least equal to 0.015 $cm^3/g$ and at most equal to 0.03 $cm^3/g$, and
   - the total specific volume of its closed porosity is at least equal to 0.02 $cm^3/g$ and at most equal to 0.04 $cm^3/g$, and
   - the ratio of the total specific volume of its open porosity over the total specific volume of its closed porosity is at least equal to 0.38 and at most equal to 0.79.

4. A powder according to any one of the preceding claims, wherein the silicon-based particles are **characterized by** a number-based size distribution having a d50, the d50 being larger than or equal to 40 nm and smaller than or equal to 150 nm.

5. A powder according to any one of the preceding claims, wherein the silicon-based particles have a chemical composition having at least 70% by weight of Si.

6. A powder according to any one of the preceding claims, having a Si content A expressed in weight percent (wt%), wherein 10 wt% $\leq$ A $\leq$ 60 wt%.

7. A powder according to any one of the preceding claims, having a Si content A and an oxygen content B, both expressed in weight percent (wt%), wherein B $\leq$ 0.3 x A.

8. A powder according to any one of the preceding claims, wherein the particles of the powder have a volume-based particle size distribution having a D10, a D50 and a D90, with 1 $\mu$m $\leq$ D10 $\leq$ 10 $\mu$m, 8 $\mu$m $\leq$ D50 $\leq$ 25 $\mu$m and 10 $\mu$m $\leq$ D90 $\leq$ 40 $\mu$m.

9. A powder according to any one of the claims preceding claims, having a BET surface area which is at most 10 $m^2/g$.

10. A powder according to any one of the preceding claims, **characterized in that** the matrix material is carbon.

11. A powder according to claim 10, having a carbon content C expressed in weight percent (wt%), wherein 22 wt% $\leq$ C $\leq$ 88.5 wt%.

12. A battery comprising a powder according to any one of the claims 1 to 11.

13. A method for preparing a powder according to any one of the preceding claims, comprising the following steps:

- Step A: providing silicon-based particles;
- Step B: dissolving a thermosetting polymer in an appropriate solvent to obtain a solution and dispersing the silicon-based particles in said solution to obtain a dispersion;
- Step C: removing the solvent from said dispersion to obtain a powder of silicon-based particles covered by the thermosetting polymer and curing said powder to obtain a cured powder;
- Step D: milling said cured powder to obtain a sub-micrometric cured powder;
- Step E: mixing said sub-micrometric cured powder with a carbon precursor to obtain a mixture and thermally treating the mixture, effecting a thermal decomposition of the carbon precursor;
- Step F: milling the powder obtained at step E and subsequently sieving it to obtain a final powder.

14. A method according to claim 13, wherein the thermosetting polymer is one of or a combination of a melamine-based polymer, a phenol-based polymer, a urethane-based polymer, an ester-based polymer, an epoxy-based polymer and their derivatives.

15. A method according to claim 13 or 14, wherein the curing at step C is performed at a temperature of at most 200°C.

**Figure 1**

**Figure 2**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HYUNG MO JEONG ET AL: "Silicon@porous nitrogen-doped carbon spheres through a bottom-up approach are highly robust lithium-ion battery anodes", RSC ADVANCES, vol. 2, no. 10, 27 January 2012 (2012-01-27), pages 4311-4316, XP055177465, DOI: 10.1039/c2ra20170d * Item 2. "Experimental section" * ----- | 1-15 | INV. H01M4/134 H01M4/36 H01M4/38 H01M4/48 H01M4/587 H01M4/62 H01M10/0525 H01M4/02 |
| A | CN 103 840 140 A (UNIV TSINGHUA; BOSCH GMBH ROBERT) 4 June 2014 (2014-06-04) * abstract * ----- | 1-15 | |

TECHNICAL FIELDS
SEARCHED      (IPC)

H01M

The present search report has been drawn up for all claims

| Place of search | Date of completion of the search | Examiner |
|---|---|---|
| Munich | 24 January 2022 | González Junquera, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 21 18 3474**

This annex lists the patent family members relating to the patent documents cited in the above-mentioned European search report.
The members are as contained in the European Patent Office EDP file on
The European Patent Office is in no way liable for these particulars which are merely given for the purpose of information.

**24-01-2022**

| Patent document cited in search report | Publication date | Patent family member(s) | Publication date |
|---|---|---|---|
| CN 103840140 A | 04-06-2014 | NONE | |

EPO FORM P0459